# EUROPEAN PATENT APPLICATION

(11) **EP 3 912 967 A1**
(43) Date of publication of application: **24.11.2021**
(21) Application number: 19927671.8
(22) Date of filing: 08.05.2019
(51) Int. Cl.: C05F 3/00

(54) **ADDITIVE FOR IMPROVING THE EFFICIENCY OF PIG PURINE AS A FERTILISER**

(71) Applicant: Fertinagro Biotech, S.L., 44195 Teruel (ES)
(72) Inventor: ATARES REAL, Sergio, 44195 Teruel (ES); ROMERO LOPEZ, Joaquín, 44195 Teruel (ES); SALAET MADORRAN, Ignasi, 44195 Teruel (ES); FERRER GINES, María, 44195 Teruel (ES); CABALLERO MOLADA, Marcos, 44195 Teruel (ES); YANCE CHAVEZ, Tula del Carmen, 44195 Teruel (ES); FUERTES DOÑATE, Carlos, 44195 Teruel (ES)
(74) Representative: González López-Menchero, Álvaro Luis
(86) International application number: PCT/ES2019/070301
(87) International publication number: WO 2020/225459

(57) **Abstract**

The invention provides an efficiency-enhancing additive for pig slurry as a fertiliser based on quinic acid, the additive reducing the phytotoxic effects of heavy metals and xenobiotic substances, in particular antibiotics, usually present in slurries applied as fertilisers in agricultural soils, which improves the efficiency of their use in the application thereof to said soils.

## Description

The present invention relates to an efficiency-enhancing additive for pig slurry as a fertiliser.

More specifically, the invention provides an efficiency-enhancing additive for slurry as a fertiliser based on quinic acid, reducing the phytotoxic effects of heavy metals and xenobiotic substances, in particular antibiotics, usually present in slurries applied as fertilisers in agricultural soils, which improves the efficiency of their use in the application thereof to said soils.

In recent decades, the growth of intensive pig farming has led to a significant increase in the generation of slurry, which can be used in arid and semi-arid soils as a source of nutrients and organic matter, constituting an opportunity to valorise this type of waste.

Specifically, Spain is the second European country (after Germany) in terms of pig population, with more than 28 million head in November 2015 (Eurostat, 2016) generating approximately 50 million tonnes of slurry per year. In some areas, the efficient recycling of such large quantities of pig slurry is a difficult challenge, mainly due to the spatial separation between livestock and agriculture and the high water content of the slurry, which makes it expensive to transport to areas far from where it is produced.

The high concentration of pig farms in some areas of Spain and Europe has led to the existence of areas with a surplus of slurry in which there are real problems for its management, causing negative effects on water resources and the atmosphere. So far, the best solution to avoid or reduce these problems is the efficient application of slurry to the land as organic fertiliser, especially in regions such as the north-east of Spain, where there is, except in some specific areas, an extensive agricultural area of both rainfed and irrigated land available for the recycling of nutrients from pig slurry.

Pig slurry has highly variable chemical compositions depending on several factors, such as the farm of origin (breeding, piglet production, fattening, breeding, full-cycle), the type of pig feeding, the way pigs are separated, the storage of the excrements and the water management of the farm.

Inadequate management of the treatment and subsequent application of slurry in agricultural fields contributes to greenhouse gas emissions and eutrophication of aquifers, mainly by leaching of NO₃₋ and PO₄³⁻, (Brockman et al., 2014, "Environmental assessment of nutrient recycling from biological pig slurry treatment--impact of fertilizer substitution and field emissions", Bioresour Technol. 163:270-9; Yuan et al., 2017, "Evaluating environmental impacts of pig slurry treatment technologies with a life-cycle perspective", J Clean Prod. 188: 840-850).

Furthermore, despite the fertiliser value of slurry, there is a certain risk of contaminating agricultural soils with heavy metals and xenobiotics, mainly antibiotics used in pig farming, substances potentially toxic to humans and the environment (L'Herroux et al., 1997, "Behaviour of metals following intensive pig slurry applications to a natural field treatment process in Brittany (France)", Environ Pollut. 97:119-30; De la Torre et al., 2000, "Ecotoxicological evaluation of pig slurry", Chemosphere. 41:1629-35; Kumar et al., 2005, "Antibiotic Uptake by Plants from Soil Fertilized with Animal Manure", J. Environ. Qual. 34:2082-2085).

In Spain, it is estimated that Cu and Zn are the metals that accumulate in the highest amounts (4 and 15 kg/ha and year) in soils where slurry is usually applied, while heavy metals such as Cd, Co, Cr, Ni and Pb are introduced in the order of 260 g/ha and year (Moral et al., 2008, "Salinity, organic content, micronutrients and heavy metals in pig slurries from South-eastern Spain", Waste Manag. 28:367-71). Moreover, slurries are contaminated with antibiotics used for veterinary purposes or with cleaning and disinfection agents used on farms (Bloem and Kratz, 2016, "Organic xenobiotics" in: E. Schnug and L.J. De Kok (eds.), Phosphorus in Agriculture: 100% Zero).

Accumulation of heavy metals and xenobiotic compounds contributes to soil degradation and limits the growth of agricultural crops (Liu et al., 2009, "Effects of six selected antibiotics on plant growth and soil microbial and enzymatic activities", Environ Pollut. 157:1636-42; Tiwari and Lata, 2018, "Heavy Metal Stress, Signaling, and Tolerance Due to Plant-Associated Microbes: An Overview", Plant Sci. 9:452). Furthermore, the emergence of antibiotic-resistant bacteria and the presence of heavy metals in crops can pose a risk to human health.

For the above reasons, there is currently a need in the plant nutrition sector to look for sustainable technologies to reduce the phytotoxic effects of heavy metals and xenobiotics in slurry applied to agricultural soils, which would improve the efficiency of its use as fertiliser and minimise possible risks to human health.

Furthermore, plants exude through roots a considerable part of the organic compounds generated in photosynthesis (between 11 and 40%) in order to regulate the chemical composition of the rhizosphere and promote the growth of microorganisms that can provide benefits to the plant in a given ecosystem (Badri and Vivanco, 2009, "Regulation and function of root exudates", Plant, Cell and Environment 32, 666-681; Zhalnina et al, 2018, "Dynamic root exudate chemistry and microbial substrate preferences drive patterns in rhizosphere microbial community assembly", Nat Microbiol, 3(4):470-480). Compounds present in root exudates include sugars, amino acids, organic acids, fatty acids and secondary metabolites (Bais et al., 2006, "The role of root exudates in rhizosphere interactions with plants and other organisms", Annu Rev Plant Biol. 57:233-66). In addition to the cultivated species and its phenological stage, the composition and quantity of these exudates are mainly influenced by environmental signals, e.g. the availability of nutrients in the soil or the presence of phytotoxic substances.

Indeed, plants have adaptation mechanisms to soils contaminated with phytotoxic compounds such as heavy metals, including the release of root exudates at the root level (Montiel-Rozas et al., 2016, "Effect of heavy metals and organic matter on root exudates (low molecular weight organic acids) of herbaceous species: An assessment in sand and soil conditions under different levels of contamination", Environ Pollut. 216:273-281) and plant-associated microorganisms play a vital role in plant adaptation to said environments (Tiwari and Lata, 2018, "Heavy Metal Stress, Signaling, and Tolerance Due to Plant-Associated Microbes: An Overview", Front Plant Sci. 9:452). The mechanism of action of root exudates in conferring tolerance to stresses caused by phytotoxic substances may be due to their direct inactivation (e.g. chelation in the case of heavy metals or chemical modification in the case of antibiotics) or stimulation of microorganisms that confer tolerance to stress caused by said compounds.

In view of the above, the present invention builds on the above approaches so that root exudates can reduce the phytotoxic effects of heavy metals and antibiotics contained in slurry on agricultural crops.

Thus, it would be desirable to have slurry additives that mimic root exudates and have a similar effect to increase crop tolerance to the heavy metals and antibiotics contained in slurry and, at the same time, increase efficiency of use and crop productivity.

The present invention fulfils the above two objectives by providing an additive applicable to pig slurry which includes quinic acid as a protectant against phytotoxic compounds, such as heavy metals, in particular cadmium and lead, and antibiotics, in particular sulfamethoxazole and sulfamethazine, commonly contained in slurry, where quinic acid reduces the phytotoxic effects of heavy metals and antibiotics in slurry and improves the agronomic efficiency of the slurry.

Quinic acid, or (1S,3R,4S,5R)-1,3,4,5-tetrahydroxycyclohexanecarboxylic acid, is a cyclic polyol and a cyclohexanecarboxylic acid found naturally in plant tissues (Pero et al., 2009, "Antioxidant metabolism induced by quinic acid. Increased urinary excretion of tryptophan and nicotinamide", Phytother Res. 23:335-46).

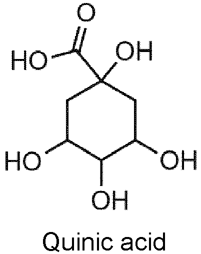

As mentioned above, in a first aspect, the present invention provides an efficiency-enhancing additive for pig slurry as a fertiliser including quinic acid.

In one embodiment, the slurry additive object of the invention consists of 100% by weight of quinic acid in the form of a water-soluble powder.

In another embodiment, the slurry additive object of the invention comprises between 40 and 85% by weight of quinic acid and between 15% and 60% by weight of other components selected from the group consisting of sugars, amino acids, organic acids, polyamines, alcohols and combinations thereof, the additive being in the form of a water-soluble powder.

When present in the slurry additive, sugars are preferably selected from mono- and disaccharides such as sucrose, fructose, trehalose, glucose, arabinose, lactose, maltose, as well as mixtures thereof.

When present in the additive, the amino acids are preferably selected from threonine, lysine, glutamine, glutamic acid, phenylalanine, methionine, GABA, ornithine, glycine, aspartic acid, serine, asparagine, tyrosine, tryptophan, valine, leucine, isoleucine, proline, 4-hydroxyproline, arginine, histidine, alanine, cysteine, and mixtures thereof.

When present in the additive, the organic acids are preferably selected from lactic acid, succinic acid, oxalic acid, gluconic acid, threonic acid, citric acid, acetic acid, fumaric acid and mixtures thereof.

When present in the additive, alcohols are preferably selected from glycerol, sorbitol, mannitol, myoinositol and mixtures thereof.

Polyamines, if present in the additive, are preferably selected from putrescine, spermidine, spermine and mixtures thereof.

The presence of these other components different from quinic acid in the additive of the invention is based on the fact that such components are either part of the root exudates in the cultures tested in the presence of slurries described below or are described in the literature as components of said exudates under normal conditions for plant development (Zhalnina et al, 2018, "Dynamic root exudate chemistry and microbial substrate preferences drive patterns in rhizosphere microbial community assembly", Nat Microbiol, 3(4):470-480), and are therefore desirable for the above-mentioned purpose of having an additive whose use mimics root exudates with an analogous effect that could enable increased use of slurry.

The slurry additive object of the invention is formulated in the form of a water-soluble powder, as indicated above, but can also be formulated as a liquid composition by dissolving it in water.

According to a second aspect, the invention relates to a pig slurry including an additive as described above in combination with an additional substance suitable for application in slurry and selected from inorganic acids, organic acids, humic substances, animal and plant organic waste, micronutrients, leonardite, wetting agents, dispersing agents, phytase enzyme, as well as combinations thereof, and/or in combination with one or more biostimulants selected from the group consisting of protein hydrolysates and amino acid mixtures, seaweed extracts, live micro-organisms, extracts of micro-organisms and combinations thereof.

In this case, the additive of the invention is present in a proportion of 0.5 to 10% by weight of the slurry.

In an embodiment, the additional inorganic acid is present in the combination in a proportion of 5 to 90% by weight and is selected from sulphuric and phosphoric acids.

In another embodiment, the additional organic acid is present in the combination in a proportion of 5 to 90% by weight and is selected from lactic acid, succinic acid, oxalic acid, gluconic acid, threonic acid, citric acid, acetic acid, fumaric acid.

In yet another embodiment, additional humic substances are present in the combination in a proportion of 5 to 90% by weight and are selected from humic acids, fulvic acids and derivatives thereof.

In another embodiment, organic animal or vegetable waste is present in the combination in a proportion of 5 to 90% by weight.

In yet another embodiment, additional micronutrients are present in the combination in a proportion of 1 to 30% by weight and are selected from ferric sulphate, magnesium sulphate, zinc sulphate, manganese sulphate, copper sulphate, ammonium molybdate, cobalt chloride.

In another embodiment, additional leonardite is present in the combination in a proportion of 5 to 90% by weight.

In another additional embodiment, the additional wetting agent is present in the combination in a proportion of 0.1 to 2% by weight.

In another additional embodiment, the additional dispersing agent is present in the combination in a proportion of 0.1 to 2% by weight.

In another additional embodiment, the additional phytase enzyme is present in the combination in a proportion of 0.1 to 2% by weight.

In the case of the combination of the slurry and the additive of the invention with biostimulants as described above, preferably the biostimulants are present in the combination in a proportion of 5 to 90% by weight.

It is also the object of the invention to use the additive alone or in the combinations described above in the form of a water-soluble powder or in liquid form after dissolving in water for application in slurry.

### Examples

### 1. Test to obtain and identify root exudates in the presence of pig slurry

In order to characterise in detail, the response of the crops to the presence of pig slurry and to identify the metabolites exuded by the roots, the Applicant analysed the differential profile of maize root exudates in the presence of slurry from piglets (fattening) and adult female pigs (mother). The test to determine the root exudates emitted in the presence of slurry is briefly described below.

In the procedure, similar to that used by other authors (Naveed et al., 2017, "Plant exudates may stabilize or weaken soil depending on species, origin and time", European Journal of Soil Science), maize seeds (variety LG 34.90) were used. The seeds were surface sterilised by washing for 5 minutes in 96% ethanol, followed by 10 minutes in 5% bleach. The seeds were then washed extensively and allowed to hydrate in sterile MilliQ water for 4 hours. For germination, the seeds were placed on a bed of filter paper moistened with sterile MilliQ water. The seeds were left to germinate in darkness for 4 days, after which the seedlings were placed in hydroponic culture trays, the roots being immersed in standard Hoagland nutrient solution. Twelve plants were placed in each tray, with three trays (each corresponding to one biological replicate) for the control treatment, three for the mother slurry treatment and three for the fattened slurry treatment. Both stock and bait slurry were applied at a dose of 1 ml per litre of nutrient solution. The plants were grown at a temperature and photoperiod of 25 °C and 16 h light/22 °C and 8 h darkness and a light intensity of 4,000 lux at the surface.

The nutrient solution was replaced with fresh solution every three days, including appropriate supplements, and kept aerated at all times by bubbler probes. After 10 days of growth, incubation was terminated and root exudates were obtained.

The plants were carefully removed from the culture trays and washed with plenty of water, followed by a final wash with distilled water. Plants from each tray were placed in wide-necked flasks containing 200 ml of MilliQ water, the roots being immersed in the water. The plants were incubated in the flasks for 6 hours. Subsequently, the plants were removed and the insoluble material was removed from the solution by filtering with 0.20 µm filters. The filtered material was flash-frozen in liquid nitrogen and freeze-dried. The dry material obtained was weighed and analysed by gas-mass chromatography after derivatization with methoxyamine and N-methyl-(trimethylsilyltrifluoroacetamide).

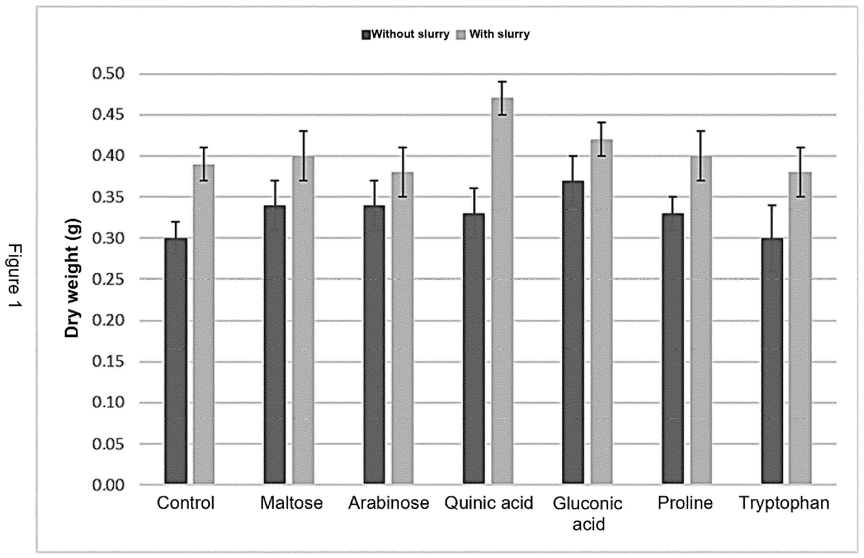

Table 1 and figure 1 show the metabolites whose exudation increases in the presence of both types of slurry, showing a two-fold increase in at least one of the two treatments compared to control conditions.

**Table 1. Increase of metabolites emitted in the presence of slurry compared to the control.**

| Metabolite | Fattened | Mothers |
|---|---|---|
| Maltose | 351.3 | 44.3 |
| Arabinose | 1.2 | 2.5 |
| Quinic acid | 2.1 | 2.4 |
| Gluconic acid | 1.2 | 2.2 |
| Proline | 2.7 | 1.3 |
| Tryptophan | 2.1 | 1.7 |

Each of the metabolites was applied at a dose of 1 kg/ha in a pot with 3 kg of soil, wheat plants were planted (3 pots per treatment with 10 plants per pot) and the effect on their dry weight was observed after 6 weeks. The effect of the metabolites was also observed at the same dose after mixing them in a mother slurry applied at a rate of 20 m³/ha. As shown in Table 2 below, quinic acid is the metabolite that most potentiates the beneficial effect of slurry application.

**Table 2. Dry biomass of wheat at 6 weeks of growth**

| Treatment | Dry weight (g) | Standard error |
|---|---|---|
| Control | 0.30 | ± 0.02 |
| Maltose | 0.34 | ± 0.03 |
| Arabinose | 0.34 | ± 0.03 |
| Quinic acid | 0.33 | ± 0.03 |
| Gluconic acid | 0.37 | ± 0.03 |
| Proline | 0.33 | ± 0.02 |
| Tryptophan | 0.30 | ± 0.04 |
| Mother slurry | 0.39 | ± 0.02 |
| Slurry + Maltose | 0.40 | ± 0.03 |
| Mother slurry + Arabinose | 0.38 | ± 0.03 |
| Mother slurry + Quinic acid | 0.47 | ± 0.02 |
| Mother slurry + Gluconic acid | 0.42 | ± 0.02 |
| Slurry + Proline | 0.40 | ± 0.03 |
| Mother Purine + Tryptophan | 0.38 | ± 0.03 |

### 2. Test for protection against heavy metals and antibiotics in slurry

Three slurry additives (A, B, C) were prepared in the form of a water-soluble powder according to the invention with the following composition:
A: 100% by weight of quinic acid.
B: a combination of between 40 and 85% by weight of quinic acid and between 5 and 20% maltose, between 5 and 20% proline and between 5 and 20% threonic acid.
C: a combination of between 40 and 85% by weight of quinic acid and between 5 and 20% arabinose, between 5 and 20% tryptophan and between 5 and 20% nicotinic acid.

These additives (A, B, C) were tested in greenhouse trials on wheat plants in combination with an adult female slurry (Slurry 1) with the following composition in heavy metals and the antibiotics sulfamethoxazole and sulfamethazine:

| Slurry 1 | |
|---|---|
| g heavy metal/m³ | |
| Cadmium | 0.15 |
| Cobalt | 0.26 |
| Chrome | 1.63 |
| Nickel | 1.34 |
| Lead | 0.75 |

| ppm antibiotic | |
|---|---|
| Sulfamethoxazole | 15.4 |
| Sulfamethazine | 24.3 |

The same additives were tested with the same Slurry to which heavy metals were added until the following concentrations were reached (Slurry 2):

| Slurry 2 | |
|---|---|
| g heavy metal/m3 | |
| Cadmium | 3.0 |
| Cobalt | 5.0 |
| Chrome | 30.0 |
| Nickel | 26.0 |
| Lead | 15.0 |

The same products were tested with the same Slurry to which the antibiotics sulfamethoxazole and sulfamethazine were added until the following concentrations were reached (Slurry 3):

| Slurry 3 | |
|---|---|
| ppm antibiotic | |
| Sulfamethoxazole | 100.0 |
| Sulfamethazine | 100.0 |

Additives and slurry were applied at the following rates:
- A: 5.0 kg/ha in mixture with slurry.
- B: 5.0 kg/ha in mixture with slurry.
- C: 5.0 kg/ha in mixture with slurry.
- Slurry: 40 m³/ha.

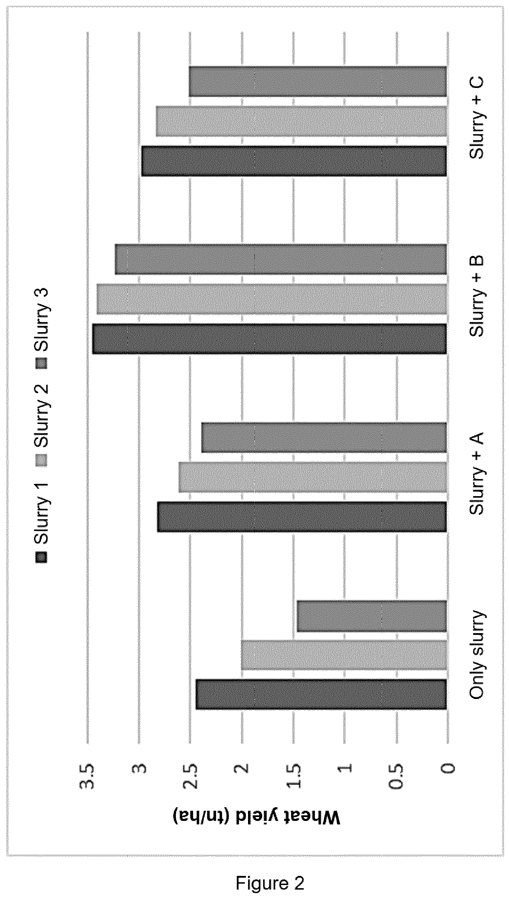

Wheat yields are shown in Table 3 below and in Figure 2:

**Table 3**

| Wheat yield (Tn grain/ha) | |
|---|---|
| Slurry 1 | 2.45 |
| Slurry 1 + A | 2.82 |
| Slurry 1 + B | 3.45 |
| Slurry 1 + C | 2.98 |
| Slurry 2 | 2.01 |
| Slurry 2 + A | 2.61 |
| Slurry 2 + B | 3.41 |
| Slurry 2 + C | 2.83 |
| Slurry 3 | 1.47 |
| Slurry 3 + A | 2.39 |
| Slurry 3 + B | 3.23 |
| Slurry 3 + C | 2.52 |

As shown in the table above and in figure 2, the presence of high concentrations of heavy metals and antibiotics in the slurry (slurry 2 and 3) had negative effects on the wheat yield. The application of the three designed additives (A, B and C) improved crop productivity, said improvement being more pronounced in slurry 2 and 3, with higher concentrations of heavy metals and antibiotics, respectively.

These results demonstrate that quinic acid-based additives counteract the phytotoxic effects of the heavy metals cadmium and lead and the antibiotics sulfamethazine and sulfamethoxazole present in pig slurry, significantly improving its fertiliser capacity.

### 3. Antibiotic degradation test

It is known that certain edaphic microorganisms have the ability to degrade antibiotics (Masse et al., 2014, "Potential of Biological Processes to Eliminate Antibiotics in Livestock Manure: An Overview Animals (Basel)", 4(2): 146-163; Kumar et al., 2019, "Antibiotics bioremediation: Perspectives on its ecotoxicity and resistance", Environ Int. ,124:448-461). Therefore, the ability of the slurry additive to increase the degradation of two antibiotics frequently present in slurry: sulfamethazine and sulfamethoxazole, was studied.

### Sulfamethazine

The biological degradation of the antibiotic sulfamethazine in soil was studied by analysing its mineralisation, a breakdown mediated by edaphic microorganisms that can be determined by quantifying the ¹⁴CO₂ released by microbial metabolism from ¹⁴C radioisotope-labelled sulfamethazine (Topp et al, 2013, "Accelerated Biodegradation of Veterinary Antibiotics in Agricultural Soil following Long-Term Exposure, and Isolation of a Sulfamethazine-degrading sp", J Environ Qual. 42(1):173-8; Hirth et al., 2016, "An effective bioremediation approach for enhanced microbial degradation of the veterinary antibiotic sulfamethazine in an agricultural soil," Chem. Biol. Technol. Agric. (2016) 3:29). ¹⁴C-sulfamethazine was applied at a concentration of 1 mg/kg in an agricultural soil. Subsequently, 40 m³/ha of the following treatments were applied:
- A: 5.0 kg/ha mixed with water.
- B: 5.0 kg/ha mixed with water.
- C: 5.0 kg/ha mixed with water.
- D: water (negative control)

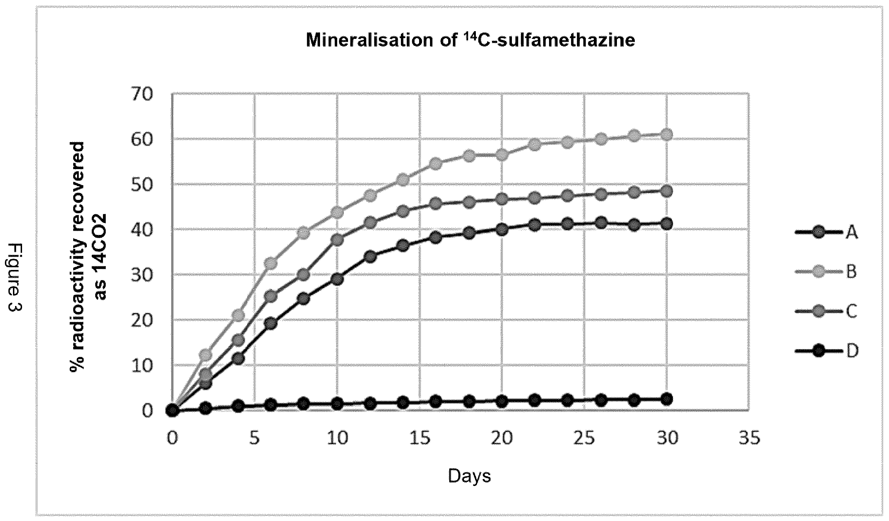

Finally, the mineralisation of ¹⁴C-sulfamethazine was determined as a function of time using a liquid scintillation counter. The results are shown in table 4 below and in figure 3.

**Table 4. ¹⁴C-sulfamethazine mineralisation in agricultural soil exposed to 1 mg/kg of the antibiotic and treatments A-D.**

| Days | A | B | C | D |
|---|---|---|---|---|
| 0 | 0 | 0 | 0 | 0 |
| 2 | 6.1 | 12.3 | 8.2 | 0.5 |
| 4 | 11.7 | 21.2 | 15.7 | 1 |
| 6 | 19.3 | 32.7 | 25.4 | 1.3 |
| 8 | 24.9 | 39.4 | 30.2 | 1.5 |
| 10 | 29.2 | 43.8 | 37.9 | 1.6 |
| 12 | 34.1 | 47.6 | 41.5 | 1.7 |
| 14 | 36.5 | 51.1 | 44.1 | 1.8 |
| 16 | 38.4 | 54.7 | 45.8 | 2 |
| 18 | 39.3 | 56.4 | 46.2 | 2.1 |
| 20 | 40.1 | 56.5 | 46.8 | 2.2 |
| 22 | 41.2 | 58.9 | 47 | 2.3 |
| 24 | 41.3 | 59.4 | 47.5 | 2.3 |
| 26 | 41.5 | 60 | 47.9 | 2.4 |
| 28 | 41.1 | 60.8 | 48.3 | 2.4 |
| 30 | 41.4 | 61.1 | 48.6 | 2.5 |

The results shown in table 4 and figure 3 demonstrate that the treatments significantly increase the biological degradation of the antibiotic sulfamethazine, especially treatment B.

### Sulfamethoxazole

To determine the biodegradation of this antibiotic in soil, a dissipation assay was performed based on that of Wu et al., 2012 ("Dissipation of sulfamethoxazole and trimethoprim antibiotics from manure-amended soils", J Environ Sci Health B., 47(4):240-9). Sulfamethoxazole was applied at 10 mg/kg and the concentration remaining in the soil was measured over time using SPE-HPLC-MS/MS.

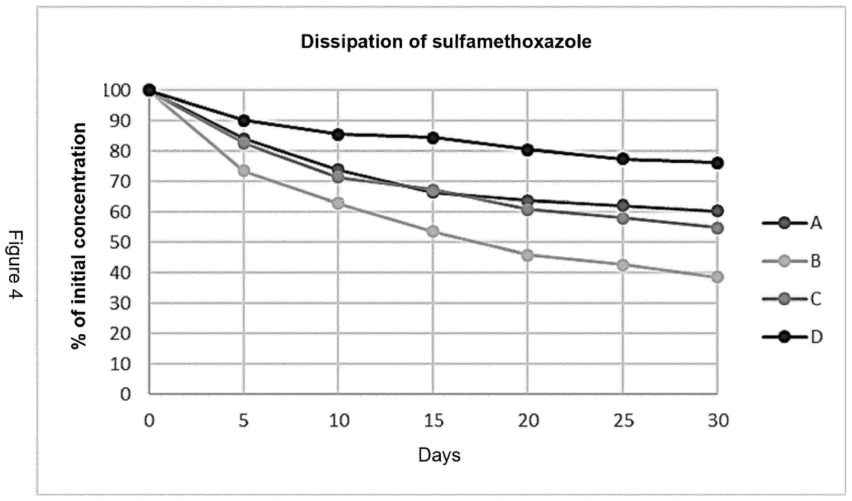

The test results are shown in Table 5 below and Figure 4.

**Table 5. Dissipation of sulfamethoxazole in agricultural soil exposed to 10 mg/kg of the antibiotic and treatments A-D.**

| Days | A | B | C | D |
|---|---|---|---|---|
| 0 | 100 | 100 | 100 | 100 |
| 5 | 84.2 | 73.6 | 82.7 | 90.2 |
| 10 | 73.9 | 62.9 | 71.4 | 85.6 |
| 15 | 66.5 | 53.7 | 67.3 | 84.4 |
| 20 | 63.8 | 45.9 | 60.9 | 80.5 |
| 25 | 62.1 | 42.8 | 58.1 | 77.6 |
| 30 | 60.4 | 38.6 | 54.8 | 76.3 |

The results indicate that the treatments, especially treatment B, increase the degradation of the antibiotic sulfamethoxazole in a process that is mediated by soil microorganisms (Wu et al., 2012, *supra*)*.*

### 4. Heavy metal availability test

Numerous bacterial genera have the ability to enhance plant tolerance to heavy metals through a variety of mechanisms, including metal sorption, bioaccumulation, and oxidation/reduction to non-toxic forms (Tiwari and Lata, 2018, "Heavy Metal Stress, Signaling, and Tolerance Due to Plant-Associated Microbes: An Overview", Frontiers in Plant Science 9(452)).

The effect of treatments A-D on the availability of two heavy metals (Cd and Pb) was determined by measuring their concentration in plant-assimilable states.

The test results are shown in Table 6 below.

**Table 6**

| Assimilable Cd (ppm) | | | | | | | |
|---|---|---|---|---|---|---|---|
| Days | A | | B | | C | | D |
| 0 | 0.226 | | 0.226 | | 0.226 | | 0.226 |
| 5 | 0.191 | | 0.168 | | 0.175 | | 0.218 |
| 10 | 0.178 | | 0.135 | | 0.153 | | 0.217 |

| Assimilable Cr (ppm) | | | | | | | |
|---|---|---|---|---|---|---|---|
| Days | A | B | C | D | | | |
| 0 | 60.4 | 60.4 | 60.4 | 60.4 | | | |
| 5 | 52.2 | 48.6 | 53.5 | 58.9 | | | |
| 10 | 49.7 | 41.7 | 51.8 | 58.2 | | | |

As can be seen from the above data, the application of the treatments decreases the concentrations of cadmium and chromium in plant-assimilable forms. The effect of treatment B is more pronounced than treatments A and C.

## Claims

1. An efficiency-enhancing additive for pig slurry as a fertiliser, **characterised in that** it includes quinic acid.

2. The additive according to claim 1, **characterised in that** it consists of 100% by weight of quinic acid in the form of a water-soluble powder or in a form dissolved in water.

3. The additive according to claim 1, **characterised in that** it consists of between 40 and 85% by weight of quinic acid and between 15 and 60% by weight of other components selected from the group consisting of sugars, amino acids, organic acids, polyamines, alcohols and combinations thereof, the additive being in the form of a water-soluble powder.

4. The additive according to claim 3, **characterised in that** the sugars are preferably selected from sucrose, fructose, trehalose, glucose, arabinose, lactose, maltose, as well as mixtures thereof.

5. The additive according to claim 3, **characterised in that** the amino acids are preferably selected from threonine, lysine, glutamine, glutamic acid, phenylalanine, methionine, GABA, ornithine, glycine, aspartic acid, serine, asparagine, tyrosine, tryptophan, valine, leucine, isoleucine, proline, 4-hydroxyproline, arginine, histidine, alanine, cysteine, and mixtures thereof.

6. The additive according to claim 3, **characterised in that** the organic acids are preferably selected from lactic acid, succinic acid, oxalic acid, gluconic acid, threonic acid, citric acid, acetic acid, fumaric acid and mixtures thereof.

7. The additive according to claim 3, **characterised in that** the alcohols are preferably selected from glycerol, sorbitol, mannitol, myoinositol and mixtures thereof.

8. The additive according to claim 3, **characterised in that** the polyamines are preferably selected from putrescine, spermidine, spermine and mixtures thereof.

9. Pig slurry including an additive according to any of claims 1 to 8 in a proportion of 0.5 to 10% by weight.

10. The pig slurry according to claim 9, in combination with another additional substance suitable for application in slurry and selected from inorganic acids, organic acids, humic substances, organic animal and plant waste, micronutrients, leonardite, wetting agents, dispersing agents, phytase enzyme, as well as combinations thereof.

11. The pig slurry according to claim 9, in combination with one or more biostimulants selected from the group consisting of protein hydrolysates and amino acid mixtures, algae extracts, live micro-organisms, extracts of micro-organisms and combinations thereof.

12. The pig slurry according to claim 10, **characterised in that** the additional inorganic acid is present in a proportion of 5 to 90% by weight and is selected from sulphuric and phosphoric acids.

13. The pig slurry according to claim 10, **characterised in that** the additional organic acid is present in a proportion of 5 to 90% by weight and is selected from lactic acid, succinic acid, oxalic acid, gluconic acid, threonic acid, citric acid, acetic acid, fumaric acid.

14. The pig slurry according to claim 10, **characterised in that** the additional humic substances are present in a proportion of 5 to 90% by weight and are selected from humic acids, fulvic acids and derivatives thereof.

15. The pig slurry according to claim 10, **characterised in that** the organic animal or vegetable waste is present in a proportion of 5 to 90% by weight.

16. The pig slurry according to claim 10, **characterised in that** the additional micronutrients are present in a proportion of 1 to 30% by weight and are selected from ferric sulphate, magnesium sulphate, zinc sulphate, manganese sulphate, copper sulphate, ammonium molybdate, cobalt chloride.

17. The pig slurry according to claim 10, **characterised in that** the additional leonardite is present in a proportion of 5 to 90% by weight.

18. The pig slurry according to claim 10, **characterised in that** the additional wetting agent is present in a proportion of 0.1 to 2% by weight.

19. The pig slurry according to claim 10, **characterised in that** the dispersing agent is present in a proportion of 0.1 to 2% by weight.

20. The pig slurry according to claim 10, **characterised in that** the enzyme phytase is present in a proportion of 0.1 to 2% by weight.

21. The pig slurry according to claim 11, **characterised in that** the biostimulants are present in a proportion of 5 to 90% by weight.
